Europäisches Patentamt

**European Patent Office**

**Office européen des brevets**

(19)

(11) Numéro de publication : **0 204 644**
**B1**

(12) **FASCICULE DE BREVET EUROPÉEN**

(45) Date de publication du fascicule du brevet :
**07.03.90**

(51) Int. Cl.⁵ : **C 01 F 7/06**, C 01 F 7/46

(21) Numéro de dépôt : **86420139.7**

(22) Date de dépôt : **27.05.86**

(54) **Procédé de production continue d'alumine à partir de bauxites à monohydrates, selon le procédé Bayer.**

(30) Priorité : 29.05.85 FR 8508575

(43) Date de publication de la demande :
**10.12.86 Bulletin 86/50**

(45) Mention de la délivrance du brevet :
**07.03.90 Bulletin 90/10**

(84) Etats contractants désignés :
**CH DE IT LI NL**

(56) Documents cités :
**US--A-- 3 413 087**
**US--A-- 3 497 317**
**US--A-- 4 426 363**

(73) Titulaire : **ALUMINIUM PECHINEY**
**23, rue Balzac**
**F-75008 Paris Cédex 08 (FR)**

(72) Inventeur : **Lepetit, Jean**
**Résidence Sainte Victoire**
**F-13100 Aix-en-Provence (FR)**

(74) Mandataire : **Pascaud, Claude et al**
**PECHINEY 28, rue de Bonnel**
**F-69433 Lyon Cédex 3 (FR)**

Jouve, 18, rue St-Denis, 75001 Paris, France

## Description

### Objet de l'invention

L'invention concerne un procédé de production continue d'alumine par attaque alcaline, selon le procédé Bayer, et en réacteur tubulaire, de bauxites principalement constituées de monohydrates d'alumine et contenant en outre de la silice sous forme de silicates d'aluminium tels que le kaolin.

### Etat de la technique

Le procédé Bayer largement décrit dans la littérature spécialisée constitue la technique essentielle de production de l'alumine destinée à être transformée en aluminium par électrolyse ignée.

Selon ce procédé, le minerai de bauxite est traité à chaud au moyen d'une solution aqueuse d'hydroxyde de sodium à concentration appropriée, provoquant ainsi la solubilisation de l'alumine et l'obtention d'une solution sursaturée d'aluminate de sodium.

Après séparation de la phase solide constituant le résidu inattaqué (boues rouges) du minerai, la solution sursaturée d'aluminate de sodium est ensemencée avec des particules de trihydroxyde d'aluminium dans le but de provoquer la précipitation de trihydrate d'alumine. La liqueur d'aluminate de sodium appauvrie en alumine est recyclée à l'étape de l'attaque après avoir été concentrée et rechargée en hydroxyde de sodium pour rétablir la concentration appropriée à l'attaque du minerai.

Il est bien connu de l'homme de métier que selon le degré d'hydratation et la structure minéralogique de l'alumine d'une part, la nature et la teneur des impuretés présentes dans la bauxite d'autre part, silice, oxydes de fer et titane en particulier, les conditions de traitement sont à adapter.

C'est ainsi que les bauxites à monohydrates nécessitent une attaque à température relativement élevée (sup. à 200 °C) pour solubiliser rapidement et quantitativement le monohydrate d'alumine qu'elles contiennent sous forme de boehmite, ou de diaspore ou éventuellement de gœthite substituée.

Cette attaque est généralement réalisée au moyen d'échangeurs de chaleur qui permettent de porter la bauxite, mise en suspension dans une liqueur de soude caustique, à la température d'attaque requise, et de réacteurs turbulents dans lesquels la suspension de bauxite est maintenue à cette température durant le temps nécessaire à la solubilisation de la majeure partie du monohydrate d'alumine qu'elle contient.

Les échangeurs de chaleur sont généralement soit des autoclaves agités dotés de faisceaux tubulaires alimentés en vapeur vive ou en vapeur provenant de la détente de la suspension de bauxite après attaque, soit des échangeurs mono ou pluritubulaires constitués de tube(s), dans le(s)quel(s) circule la suspension de bauxite, insérés dans une enveloppe tubulaire externe alimentée en fluide caloporteur (vapeur vive ou vapeur de détente, sels fondus, liquides organiques, suspension encore chaude après attaque). Les réacteurs turbulents sont généralement soit des autoclaves agités dotés ou non de faisceaux de chauffe, soit un tube de longueur suffisante pour assurer le temps de séjour nécessaire, à la température d'attaque, compte tenu de la vitesse de circulation de la suspension dans le tube.

La suspension après attaque est refroidie jusqu'à la pression atmosphérique, soit par détentes successives dans des détendeurs, qui produisent de la vapeur destinée à alimenter les échangeurs de chaleur, soit par échange direct avec la suspension de bauxite initiale à réchauffer, dans des échangeurs mono ou multitubulaires.

### Problème posé par l'art antérieur

Entre le moment où la bauxite est mise en contact avec la liqueur de soude et le moment où elle sort du réacteur tubulaire à la température d'attaque, différentes réactions chimiques importantes se déroulent.

En premier lieu, si la bauxite contient une certaine proportion de trihydrate d'alumine (hydrargillite), celui-ci est solubilisé intégralement avant que soit atteinte la température maximale d'attaque (généralement avant 160 °C).

En second lieu, le silicate d'alumine, généralement sous forme de kaolin $Al_2O_3$, $2SiO_2$, $2H_2O$ est dissous puis reprécipité sous forme de silicoaluminate de sodium (kaolinite) à une température généralement inférieure à 180 °C.

Cette dernière réaction est gênante pour la bonne conduite des échangeurs de chaleur car la précipitation du silicoaluminate de sodium se fait en particulier sur les surfaces internes d'échange thermique des échangeurs (du côté de la suspension de bauxite) avec formation de dépôts de tartres, peu conducteurs de la chaleur, ce qui entraîne une perte d'efficacité de ces échangeurs.

Quand ces tartres ont atteint une certaine épaisseur, les pertes thermiques et les difficultés de circulation de la suspension deviennent telles qu'il faut arrêter l'installation et éliminer le tartre par voie chimique (dissolution acide), mécanique (destruction par chocs) ou hydraulique (jets sous haute pression).

Sur le plan économique, la fréquence des opérations de détartrage réduit considérablement les possibilités d'emploi des échangeurs de chaleur de type tubulaire ou à faisceaux tubulaires et à fortiori, pour l'attaque de bauxite à monohydrates, celles de réacteurs mono tubulaires ou pluritubulaires dont le coût d'investissement est pourtant nettement moindre que celui des autoclaves.

Etat de l'art antérieur

Différentes solutions ont été proposées pour limiter ce phénomène d'entartrage dans les échangeurs tubulaires ou les autoclaves agités dotés de faisceaux tubulaires.

La demande de brevet allemand (DE-A-1 592 194, déposée le 6 mai 1967 équivalent à FR-B-1 546 418) indique que l'on peut limiter la vitesse de formation des tartres dans des échangeurs mono ou pluritubulaires en faisant circuler la suspension de bauxite à l'intérieur du ou des tubes à une vitesse élevée, de préférence comprise entre 2 et 5 m/s.

Cependant, la demanderesse a pu vérifier que des vitesses élevées (> 1 m/s) à travers les faisceaux d'autoclaves sont très difficiles à atteindre et au-delà de 2 m/s dans des échangeurs mono ou pluritubulaires, on atteint des pertes de charges très élevées surtout dans les installations de grande capacité, qui sont les plus répandues car plus économiques en investissements et frais d'exploitation.

Par exemple, pour une installation d'attaque à 260 °C permettant de produire de produire 300 000 t $Al_2O_3$ par an, la perte de charge sur la suspension de bauxite à réchauffer jusqu'à 260 °C passe de 10 à 70 bars quand la vitesse de passage de la suspension passe de 2 à 5 m/s, pour une même surface d'échange de chaleur.

Un autre exemple tiré de l'exploitation industrielle simultanée sur la même qualité de bauxite de deux installations d'attaque équipées l'une d'autoclaves chauffés par des faisceaux tubulaires, l'autre de réchauffeurs monotubulaires utilisés comme réacteurs, a montré que la vitesse de passage de la suspension de bauxite est un critère important pour assurer un régime hydraulique convenable des échangeurs de chaleur, mais pas vis-à-vis de l'entartrage.

En effet, la durée de bon fonctionnement de l'attaque à autoclaves a pu atteindre 75 jours entre deux détartrages, alors que l'attaque à échangeur monotubulaire n'a pu fonctionner que 24 jours bien que la vitesse de passage de la suspension (1.8 m/s) ait été supérieure à la vitesse moyenne de passage à travers les faisceaux tubulaires des autoclaves, vitesse obtenue grâce à une agitation radiale au moyen d'un agitateur à palettes.

C'est seulement avec des vitesses de passage très élevées conduisant à une abrasion importante des parois du tube que l'on peut empêcher la formation ou la croissance des tartres. Cette solution est à proscrire dans le cas de bauxites très abrasives comme les bauxites à diaspore de Grèce ou de Chine.

Néanmoins, la demanderesse a découvert à l'occasion de ces essais comparatifs que le critère important vis-à-vis de l'entartrage était la vitesse de montée en température de la suspension de bauxite dans les échangeurs.

Ainsi, plus cette vitesse de montée en température est élevée et plus l'entartrage est massif sur les surfaces de chauffe.

D'ailleurs, d'une manière générale, l'augmentation de la vitesse de passage de la suspension dans des échangeurs mono ou pluritubulaires contribue à augmenter la vitesse de montée en température.

De la même façon, le brevet hongrois n° 457 déposé le 14 novembre 1960 (GB 939 619 et DE1 202 258) préconise une vitesse de circulation élevée de 1,2 à 1,5 m/s et met en évidence l'amélioration apportée, en ce qui concerne l'entartrage, par une opération de dessilicatation avant introduction de la suspension de bauxite dans les échangeurs de chaleur. Cette opération de dessilicatation consiste à maintenir sous agitation la suspension de bauxite durant 6 à 10 heures à une température comprise entre 70 et 100 °C. Ce brevet indique également une amélioration similaire dans le cas où l'opération de dessilicatation est réalisée à plus de 120 °C dans un réacteur non chauffé, mais inséré dans une série d'autoclaves.

En ce qui concerne la dessilicatation avant attaque à une température comprise entre 70 et 100 °C, la demanderesse a pu constater que le gain sur l'entartrage permis par cette solution est très faible, voire nul dans la mesure où le gain sur l'entartrage est compensé :
— d'une part par le fait qu'il faut chauffer la suspension de bauxite à la dessilicatation avant entrée dans les réchauffeurs d'attaque, ce qui est défavorable à la récupération thermique dans les échangeurs de chaleur en raison de la diminution de l'écart de température entre sources chaude et froide,
— d'autre part par les pertes thermiques de la dessilicatation.

La demanderesse, poursuivant ses investigations, a constaté aussi que le taux de transformation du silicate d'alumine en silico-aluminate de sodium dans les conditions du brevet hongrois précité est inférieur à 50 % comme il est cité dans ce brevet et que ce taux de transformation est insuffisant pour garantir un gain sur la récupération thermique dans les échangeurs de chaleur.

Le brevet hongrois précité préconise également la possibilité de réaliser la dessilicatation à température supérieure à 120 °C dans des réacteurs situés entre les échangeurs de chaleur.

Cette solution a été expérimentée industriellement par la demanderesse avec différents types de bauxite en assurant un temps de séjour de 30 minutes à 130-135 °C dans deux autoclaves agités mais non chauffés.

3

Cette solution a permis d'augmenter la durée de fonctionnement des échangeurs monotubulaires de 24 à 30 jours seulement.

L'explication a posteriori de ces résultats décevants a été que, d'une part le temps de séjour de 30 mm était insuffisant et que la température à laquelle se situait le temps de séjour était trop élevée.

L'optimisation des conditions d'une telle dessilicatation pour obtenir des résultats équivalents à une attaque en autoclave (75 jours de fonctionnement) aurait conduit à investir dans au moins 5 autoclaves de temps de séjour, c'est-à-dire presque autant que dans une attaque dont les échangeurs de chaleur sont constitués d'autoclaves et de faisceaux tubulaires (il en faut 6 pour monter à 160 °C).

Le gain d'investissement lié à la substitution d'échangeurs type autoclaves pour des échangeurs type mono ou pluritubulaires aurait été ainsi perdu.

Cette solution n'offre véritablement d'intérêt que pour l'attaque de bauxites à hydrargillite à température inférieure à 170 °C. Dans ces conditions, le coût d'investissement de l'autoclave assurant un temps de séjour en température est sensiblement plus faible en raison d'une pression de travail inférieure.

### Problème technique à résoudre

La demanderesse a donc recherché dans quelles conditions des échangeurs mono ou pluritubulaires, moins coûteux en investissement que des autoclaves équipés de faisceaux tubulaires, pouvaient être exploités sans arrêts pour détartrage, pendant des périodes supérieures à 30 jours, comme de véritables réacteurs d'attaque de bauxites principalement constituées de monohydrates d'alumine.

### Objet de l'invention

L'objet de la présente invention est un procédé de traitement de bauxites principalement constituées de monohydrates d'alumine, et contenant également une certaine quantité de silice, notamment sous forme de kaolin $Al_2O_3$, $2SiO_2$, $2H_2O$, procédé permettant de réduire très sensiblement la vitesse d'entartrage des échangeurs de température et des réacteurs tubulaires, ce procédé comportant les stades suivants :

1. Broyage et mise en suspension de la bauxite dans une solution aqueuse d'hydroxyde de sodium (opération de base du procédé Bayer), à raison d'environ 1 tonne de bauxite (de 0,14 à 1,8 tonne) par mètre-cube de liqueur sodique à une concentration d'environ 150 à 300 grammes de $Na_2O$ caustique par litre. Selon sa provenance, cette liqueur peut aussi contenir une certaine proportion d'alumine solubilisée. Dans cette solution sodique, la mise en solution de l'alumine monohydratée ne peut pas se produire à basse température.

2. Dessilicatation de la suspension à la pression atmosphérique, par maintien à une température comprise entre 90 et 108 °C, et pendant une durée suffisante pour transformer au moins 75 % du silicate d'alumine contenu dans la bauxite en silico-aluminate de sodium insoluble.

3. Adjonction éventuelle de liqueur sodique, de concentration égale à ou voisine de celle utilisée au premier stade, de façon à avoir de 0,14 à 0,25 tonne de bauxite par $m^3$ de liqueur.

4. Réchauffage de la suspension à la vapeur dans un échangeur de température tubulaire, sous pression, à une température au moins égale à 160 °C, et de préférence comprise entre 160 et 230 °C, avec une vitesse de montée en température de la suspension de bauxite comprise entre 2 et 12 °C/mn et de préférence entre 2 et 10 °C/mn et une vitesse de passage de la suspension comprise entre 0,4 et 7 mètres/s, et de préférence entre 1 et 4 mètres/s.

5. La suspension de bauxite est alors, par échange avec un fluide caloporteur, portée à une température comprise entre 200 et 300 °C, et de préférence entre 230 et 290 °C, et maintenue à cette température pendant la durée nécessaire pour solubiliser au moins 90 % de l'alumine extractile, c'est-à-dire non combinée à la silice.

6. Enfin, et conformément au procédé Bayer, la suspension est refroidie par des détentes successives pour la ramener à la pression atmosphérique, ces détentes produisant de la vapeur destinée au réchauffage, dans les échangeurs mono ou pluritubulaires, de la suspension non attaquée.

La liqueur sodique utilisée au premier stade, de broyage et mise en suspension de la bauxite, peut provenir, au moins partiellement, du recyclage des liqueurs dites « partiellement épuisées en alumine », en fin de cycle Bayer, et qui peuvent encore contenir de 150 à 250 g/litre de $Na_2O$ caustique, et de 80 à 160 grammes/litre d'alumine solubilisée sous forme d'aluminate de sodium.

De même, après le stade de dessilicatation, on procède à la dilution de la suspension de bauxite par addition de cette même solution sodique, de façon à avoir environ 0,14 à 0,25 T de bauxite par $m^3$ de liqueur sodique.

Dans le procédé, objet de l'invention, le stade de dessilicatation est particulièrement important. Le temps nécessaire à la transformation du silicate d'alumine en silico-aluminate de sodium est variable et dépend en particulier de la teneur en silicate d'alumine de la bauxite et de la quantité de liqueur sodique mise en présence de la bauxite durant la dessilicatation. Ce temps est réduit en particulier quand la teneur en silicate d'alumine de la bauxite augmente, ou quand la quantité de liqueur par tonne de bauxite mise en présence de celle-ci, diminue.

De plus, la demanderesse a découvert que ce temps était encore réduit si l'on réalisait la dessilicatation dans une succession de bacs agités et disposés en série plutôt que dans un bac agité unique.

L'entartrage des réchauffeurs mono ou pluritubulaires par les tartres de silicoaluminate de sodium jusqu'à une température de 170 °C diminue considérablement quand le taux de transformation du silicate d'alumine en silicoaluminate de sodium augmente au-delà de 75 %. Ainsi, le temps de bon fonctionnement des échangeurs d'attaque entre 2 détartrages peut être doublé quand ce taux de transformation passe de 75 % à 95 %.

La vitesse de circulation dans les tubes échangeurs doit être de préférence supérieure à 1 m/s afin de prévenir le dépôt de grosses particules de bauxite au fond des tubes disposés horizontalement dans lesquels circule la suspension de bauxite. Au-delà de 4 m/s, et surtout au-delà de 7 m/s, la vitesse d'abrasion des tubes échangeurs n'est plus négligeable.

La vitesse optimale est fonction de la capacité des réacteurs d'attaque. En effet, plus cette capacité est importante, et plus la vitesse de montée en température est faible pour un même nombre de tubes dans lesquels circule la suspension. Afin de ne pas avoir des vitesses de montée en température trop élevées (pas plus de 10 °C/mn) qui favorisent la formation des tartres, on n'aura pas intérêt à avoir des tubes de trop petit diamètre ($< 80$ mm) en mono et a fortiori en pluritubulaire. Par contre, pour des tubes de fort diamètre ($> 250$ mm) on pourra travailler avec des vitesses de l'ordre de 2 m/s et plus. Le temps de séjour de la suspension de bauxite à la température d'attaque sera suffisant pour que plus de 90 % de l'alumine sous forme de tri ou monohydrate soit solubilisés.

## Exemples de mise en œuvre de l'invention

### Exemple 1

On a attaqué une bauxite à monohydrate (bœhmite) contenant également du trihydrate (hydrargillite), ayant la composition suivante :

| Elément | % en poids |
|---|---|
| Perte au feu | 25,8 % |
| $Al_2O_3$ | 54,9 |
| $Fe_2O_3$ | 7,5 |
| $TiO_2$ | 2,9 |
| $SiO_2$ totale | 5,8 |
| $SiO_2$ en silicate d'alumine | 3,0 |

On a procédé à la dessilicatation durant 5 heures dans 3 bacs en série, agités, maintenus à 100 °C en présence d'une tonne de bauxite finement broyée en suspension dans 1 m$^3$ de liqueur sodique à 220 grammes $Na_2O$ caustique par litre de liqueur et 135 g $Al_2O_3$ par litre de liqueur de manière à transformer 82 % du silicate d'alumine en silicoaluminate de sodium. Puis on a réchauffé la suspension de bauxite issue de la dessilicatation, mélangée à 6 m$^3$ de liqueur sodique à 220 g $Na_2O/l$ et 135 g $Al_2O_3$ soluble/litre, sous forme d'aluminate de sodium, dans des échangeurs monotubulaires parcourus par la suspension à une vitesse de sodium, dans des échangeurs monotubulaires parcourus par la suspension à une vitesse de 2 m/s, et avec une montée en température de 6 °C/mn jusqu'à 175 °C, puis on a porté et maintenu la température à 235 °C pour effectuer la mise en solution du monohydrate d'alumine. On a ensuite refroidi la suspension, après attaque, par détentes successives, jusqu'à la pression atmosphérique, avec récupération de la vapeur de détente, utilisée pour le réchauffage de la suspension.

Le temps moyen entre deux arrêts successifs pour éliminer les tartres de silicoaluminate de sodium a été de 55 jours.

### Exemple 2

On a attaqué une bauxite à monohydrate (type « diaspore ») ayant la composition suivante :

| Elément | % |
|---|---|
| Perte au feu | 15,2 |
| $Al_2O_3$ | 68,0 |
| $Fe_2O_3$ | 1,3 |
| $TiO_2$ | 4,2 |
| $SiO_2$ tot. | 11,1 |

On a procédé à la dessilicatation, durant 5 heures, à 100 °C, dans 3 bacs en série, agités, de 1,8 tonne de bauxite en suspension dans 8 m$^3$ de liqueur sodique recyclée à 230 g $Na_2O$ caustique et 140 g $Al_2O_3$

soluble (sous forme d'aluminate de Na) par litre de solution, de manière à transformer 88 % du silicate d'alumine en silico-aluminate de sodium. Puis on a réchauffé cette suspension dessilicatée jusqu'à 220 °C, dans des réchauffeurs mono-tubulaires, en élevant la température de 4 °C par minute et en réglant la vitesse de la suspension à 2,0 mètres par seconde.

On a ensuite porté et maintenu la température à 260 °C pour effectuer la mise en solution du monohydrate d'alumine, puis refroidi la suspension par détentes successives jusqu'à la pression atmosphérique, avec récupération de la vapeur de détente, utilisée pour le réchauffage de la suspension.

On a noté une durée de plus de 60 jours entre deux arrêts consécutifs de l'installation pour éliminer les dépôts d'entartrage de silico-aluminate de sodium.

## Revendications

1. Procédé de production continue d'alumine, selon le procédé Bayer, de bauxites principalement constituées de monohydrates d'alumine et contenant de la silice libre ou combinée sous forme de silicate d'alumine, comportant notamment un préchauffage de la suspension de bauxite dans une liqueur sodique maintenue agitée, son transfert à vitesse contrôlée dans des échangeurs tubulaires et son réchauffage à une température voisine de la température de dissolution du monohydrate d'alumine avant attaque en réacteurs, à une température d'au moins 200 °C, caractérisé en ce que, dans le but de retarder l'entartrage des réacteurs par les dépôts sur leurs parois de silicoaluminate de sodium, on réalise successivement les opérations suivantes :

1) la bauxite est mise en suspension par broyage dans une liqueur sodique ou solution aqueuse d'hydroxyde de sodium à raison de 0,14 à 1,8 tonnes de bauxite par $m^3$ de ladite solution contenant de 150 à 300 grammes par litre de $Na_2O$ caustique,

2) cette suspension est portée à une température comprise entre 90 et 108 °C et maintenue à cette température pendant un temps suffisant pour transformer au moins 75 % du silicate d'alumine contenu dans la bauxite en silicoaluminate de sodium insoluble,

3) la suspension est alors réchauffée à la vapeur par passage dans un échangeur tubulaire, sous pression, à une température au moins égale à 160 °C et, de préférence, comprise entre 160 et 230 °C, avec une vitesse de montée en température comprise entre 2 et 12 °C/minute, et une vitesse de passage dans l'échangeur tubulaire comprise entre 0,4 et 7 m/s.

4) la suspension est portée, par échange thermique, avec un fluide caloporteur, dans un échangeur tubulaire, faisant office de réacteur, à une température comprise entre 200 et 300 °C, et, de préférence, entre 230 et 290 °C, et maintenue à cette température de façon à solubiliser au moins 90 % de l'alumine extractible, la suspension étant ensuite ramenée à la pression atmosphérique par détentes successives, avec récupération de la vapeur.

2. Procédé selon la revendication 1, caractérisé en ce que, au second stade, la durée de séjour à la température de 90 à 108 °C est comprise entre 2 et 10 heures de façon à transformer au moins 85 % du silicate d'alumine en silico-aluminate de sodium insoluble.

3. Procédé selon la revendication 1, caractérisé en ce que, après le deuxième stade on rajoute de la liqueur sodique, de façon à avoir un rapport masse de bauxite (en tonnes) dessilicatée par $m^3$ de liqueur sodique comprise entre 0.14 et 0.25.

4. Procédé selon revendications 1 ou 3, caractérisé en ce que la liqueur sodique provient, au moins en partie, du recyclage des liqueurs partiellement épuisées en alumine soluble en fin de cycle Bayer et peut contenir de 80 à 160 grammes par litre d'alumine soluble et de 150 à 250 grammes par litre de $Na_2O$ caustique.

5. Procédé selon revendication 1, caractérisé en ce que, au troisième stade, la vitesse de montée en température est comprise entre 3 et 8 °C/mn.

6. Procédé selon la revendication 1, caractérisé en ce que, au troisième stade, la vitesse de circulation dans le réacteur tubulaire est comprise entre 1 et 4 m/s.

7. Procédé selon la revendication 1, caractérisé en ce que le quatrième stade est effectué en réacteur monotubulaire.

8. Procédé selon la revendication 1, caractérisé en ce que le quatrième stade est effectué à une température supérieure à 230 °C si la bauxite est à base de boehmite, et supérieure à 255 °C si la bauxite est à base de diaspore.

9. Procédé selon revendication 1, caractérisé en ce que le quatrième stade est effectué dans un réacteur constitué par un faisceau multitubulaire.

## Claims

1. A process for the continuous production of alumina using the Bayer process from bauxites primarily comprising aluminium monohydrates and containing silica in a free state or combined in the form of aluminium silicate, comprising in particular preheating of the suspension of bauxite in a sodic liquor which is kept in an agitated condition, transfer thereof at a controlled speed into tubular exchangers and reheating thereof to a temperature close to the temperature of dissolution of the aluminium monohydrate before an attack operation in reactors, at a temperature of at least 200 °C, characterised in that, in order to retard scaling of the reactors by the deposits on the walls thereof of sodium aluminosilicate, the following operations are successively carried out :

1) the bauxite is put into suspension by crushing in a sodic liquor or aqueous solution of sodium hydroxide in a proportion of from 0.14 to 1.8 tonnes of bauxite per m³ of said solution containing from 150 to 300 grams per litre of caustic $Na_2O$,

2) said suspension is raised to a temperature of from 90 to 108 °C and held at that temperature for a period of time sufficient to convert at least 75 % of the aluminium silicate contained in the bauxite into insoluble sodium aluminosilicate.

3) the suspension is then subjected to steam heating by being passed through a tubular heat exchanger under pressure at a temperature which is at least equal to 160 °C and preferably between 160 and 230 °C, with a speed of rise in temperature of from 2 to 12 °C/minute and with a speed of flow in the tubular exchanger of from 0.4 to 7 m/s,

4) the suspension is raised by heat exchange with a heat exchange fluid in a tubular exchanger acting as a reactor to a temperature of from 200 to 300 °C and preferably from 230 to 290 °C and maintained at that temperature so as to solubilise at least 90 % of the extractable alumina, the suspension then being returned to atmospheric pressure by successive expansion operations, with recovery of the steam.

2. A process according to claim 1 characterised in that in the second stage the residence time at the temperature of from 90 to 108 °C is from 2 to 10 hours so as to convert at least 85 % of the aluminium silicate into insoluble sodium aluminosilicate.

3. A process according to claim 1 characterised in that, after the second stage, sodic liquor is added so as to have a ratio by mass of desilicated bauxite (in tonnes) per m³ of sodic liquor of from 0.14 to 0.25.

4. A process according to claim 1 or claim 3 characterised in that the sodic liquor originates at least in part from recycling of the liquors which are partially exhausted in respect of soluble alumina at the end of a Bayer cycle and which may contain from 80 to 160 grams per litre of soluble alumina and from 150 to 250 grams per litre of caustic $Na_2O$.

5. A process according to claim 1 characterised in that, in the third stage, the speed of rise in temperature is from 3 to 8 °C/minute.

6. A process according to claim 1 characterised in that, in the third stage, the speed of flow in the tubular reactor is between 1 and 4 m/s.

7. A process according to claim 1 characterised in that the fourth stage is carried out in a single-tube reactor.

8. A process according to claim 1 characterised in that the fourth stage is carried out at a temperature of higher than 230 °C if the bauxite is a boehmite-based bauxite and at temperature of higher than 255 °C if the bauxite is a diaspore-based bauxite.

9. A process according to claim 1 characterised in that the fourth stage is carried out in a reactor formed by a multi-tube nest.

## Patentansprüche

1. Verfahren zur kontinuierlichen Erzeugung von Aluminiumoxid nach dem Bayer-Verfahren aus Bauxiten, die hauptsächlich aus Aluminiumoxidmonohydraten bestehen und freies oder in Aluminiumsilikatform gebundenes Siliziumdioxid enthalten, das vor allem eine Vorerhitzung der Bauxitsuspension in einer gerührt gehaltenen Natronflüssigkeit, ihre Überführung mit gesteuerter Geschwindigkeit in rohrförmige Austauscher und ihre Wiedererhitzung auf eine Temperatur nahe der Auflösungstemperatur des Aluminiumoxidmonohydrats vor Aufschluß in Reaktionsbehältern bei einer Temperatur von wenigstens 200 °C umfaßt, dadurch gekennzeichnet, daß man zwecks Verzögerung der Bedeckung der Reaktionsbehälter durch die Ablagerungen von Natriumsilicoaluminat auf ihren Wänden nacheinander die folgenden Schritte durchführt :

1) Der Bauxit wird durch Zerkleinern in einer Natronflüssigkeit oder wäßrigen Natriumhydroxidlösung im Verhältnis von 0,14 bis 1,8 t Bauxit je m³ dieser 150 bis 300 g/l kaustisches $Na_2O$ enthaltenden Lösung in Suspension gebracht ;

2) diese Suspension wird auf eine Temperatur im Bereich von 90 bis 108 °C gebracht und bei dieser Temperatur während einer ausreichenden Zeit gehalten, um wenigstens 75 % des im Bauxit enthaltenen Aluminiumsilikats in unlösliches Natriumsilicoaluminat umzuwandeln ;

3) die Suspension wird dann im Dampf mittels Durchstroms durch einen rohrförmigen Austauscher unter Druck auf eine Temperatur von wenigstens gleich 160 °C und vorzugsweise im Bereich von 160 bis 230 °C mit einer Temperaturanstiegsgeschwindigkeit im Bereich von 2 bis 12 °C/min und einer Strömungsgeschwindigkeit im rohrförmigen Austauscher im Bereich von 0,4 bis 7 m/s wiedererhitzt ;

4) die Suspension wird durch Wärmeaustausch mit einem Wärmeträgerfluid in einem als Reaktionsbehälter dienenden rohrförmigen Austauscher auf eine Temperatur im Bereich von 200 bis 300 °C und vorzugsweise von 230 bis 290 °C gebracht und bei dieser Temperatur so gehalten, um wenigstens 90 % des extrahierbaren Aluminiumoxids aufzulösen, wonach die Suspension durch aufeinanderfolgende Entspannungen unter Wiedergewinnung des Dampfes auf den atmosphärischen Druck zurückgeführt wird.

2. Verfahren nach Anspruch 1, dadurch gekennzeichnet, daß im zweiten Schritt die Verweildauer bei der Temperatur von 90 bis 108 °C im Bereich von 2 bis 10 Stunden derart liegt, um wenigstens 85 % des Aluminiumsilikats in unlösliches Natriumsilicoaluminat umzuwandeln.

3. Verfahren nach Anspruch 1, dadurch gekennzeichnet, daß man nach dem zweiten Schritt Natronflüssigkeit derart zusetzt, um ein Massenverhältnis von entsilikatisiertem Bauxit (in t) je m$^3$ Natronflüssigkeit im Bereich von 0,14 bis 0,25 zu haben.

4. Verfahren nach Ansprüchen 1 oder 3, dadurch gekennzeichnet, daß die Natronflüssigkeit wenigstens teilweise von der Rückführung der teilweise an löslichem Aluminiumoxid am Ende des Bayer-Zyklus erschöpften Flüssigkeiten stammt und 80 bis 160 g/l lösliches Aluminiumoxid und 150 bis 250 g/l kaustisches Na$_2$O enthalten kann.

5. Verfahren nach Anspruch 1, dadurch gekennzeichnet, daß im dritten Schritt die Temperaturanstiegsgeschwindigkeit im Bereich von 3 bis 8 °C/min ist.

6. Verfahren nach Anspruch 1, dadurch gekennzeichnet, daß im dritten Schritt die Durchlaufgeschwindigkeit im rohrförmigen Reaktionsbehälter im Bereich von 1 bis 4 m/s ist.

7. Verfahren nach Anspruch 1, dadurch gekennzeichnet, daß der vierte Schritt im Einrohrreaktionsbehälter durchgeführt wird.

8. Verfahren nach Anspruch 1, dadurch gekennzeichnet, daß der vierte Schritt bei einer Temperatur über 230 °C, wenn der Bauxit auf Boehmitbasis ist, und über 255 °C durchgeführt wird, wenn der Bauxit auf Diasporbasis ist.

9. Verfahren nach Anspruch 1, dadurch gekennzeichnet, daß der vierte Schritt in einem aus einem Vielrohrbündel bestehenden Reaktionsbehälter durchgeführt wird.